# EUROPEAN PATENT APPLICATION

(11) **EP 4 778 435 A1**
(43) Date of publication of application: **22.07.2026**
(21) Application number: 25219587.0
(22) Date of filing: 28.11.2025
(51) Int. Cl.: A47L 7/00, A47L 9/12, A47L 9/14, A47L 11/40

(54) **SURFACE CLEANING APPARATUS WITH FILTER**

(30) Priority: 21.01.2025 US 202519032522
(71) Applicant: Bissell Inc., Grand Rapids, MI 49544 (US)
(72) Inventor: PRUIETT, Jason, Grand Rapids, 49544 (US); FINNIE, Alan, Grand Rapids, 49544 (US)
(74) Representative: Sandersons

(57) **Abstract**

A surface cleaning apparatus (10) includes a recovery tank (22) including a tank cover (112) that defines an air outlet (114) through which a working airstream passes to exit the recovery tank (22), and a filter (116) fluidly downstream of the air outlet (114). A filter mount (126) supports the filter (116) and is configured to automatically move the filter (116) to expose an upstream side (118) of the filter (116) to view upon disassembly of the recovery tank (22) from the apparatus. Methods for user disassembly and servicing of a surface cleaning apparatus (10) with a recovery tank (22) and a filter (116) are also provided.

## Description

### BACKGROUND

Surface cleaning apparatus include wet/dry vacuum cleaners or multi-surface cleaners that can be used to clean hard floor surfaces such as tile and hardwood and soft floor surfaces such as area rugs and carpet. Some multi-surface cleaners comprise a fluid delivery system that delivers cleaning fluid, usually liquid, to a surface to be cleaned and a recovery system that extracts liquid and debris from the surface. The delivery system typically includes one or more supply tanks for storing a supply of cleaning liquid, a distributor for applying the liquid to the surface to be cleaned, and a supply conduit for delivering the liquid from the supply tank to the distributor. An agitator can be provided for agitating the liquid on the surface. The recovery system typically includes a recovery tank, a nozzle adjacent the surface to be cleaned and in fluid communication with the recovery tank, and a source of suction to draw liquid from the surface to be cleaned and through the nozzle and to the recovery tank.

Some multi-surface cleaners perform wet cleaning well, but at the expense of, or to the complete exclusion of, dry vacuuming. Providing a single cleaning apparatus that can effectively perform both wet cleaning of hard and soft floors, as well as dry vacuuming provides unique challenges related to fluid dispensing, surface agitation, and separation of collected liquid and debris.

The collection of both liquid and debris demands regular maintenance for multi-surface cleaners. Currently, the cleanout experience is often messy and time-consuming. A filter is often present in the recovery pathway between the recovery tank and the inlet of the suction source. Failure to properly maintain the filter can impede air movement through the recovery pathway and may lead to poor performance. Compliance with proper maintenance requirements has proved challenging to current multi-surface wet/dry vacuum cleaner designs.

### BRIEF SUMMARY

A surface cleaning apparatus with an improved filter mounting structure is provided herein.

According to one aspect of the disclosure, a surface cleaning apparatus includes a housing including a suction inlet port, a suction source within the housing, the suction source configured to generate a working airstream through a recovery pathway including the suction inlet port, a recovery tank removably mounted on the housing and forming a portion of the recovery pathway, the recovery tank including a tank container comprising an opening at an upper end thereof and a tank cover closing the opening at an upper end thereof, the tank cover comprising a recess and an air outlet through which the working airstream passes to exit the recovery tank, a filter fluidly downstream of the air outlet, the filter comprising an upstream side and a downstream side through which the working airstream sequentially passes, and a filter mount coupled to one of the tank cover and the housing, the filter mount configured to support the filter and having nested position in which the filter mount is at least partially received within the recess of the tank cover and the upstream side of the filter faces a bottom of the recess and an exposed position in which the filter mount is at least partially outside the recess and the upstream side of the filter is visible (e.g., from a user's perspective looking at and/or down at the recovery tank), wherein the filter mount is configured to automatically move from the nested position to the exposed position in response to disassembly of the recovery tank from the housing, whereby a user can visually inspect the upstream side of the filter to determine the dirtiness of the filter (e.g., without removing the filter from the filter mount).

According to another aspect of the disclosure, a surface cleaning apparatus includes an upright body comprising a handle and a frame, a cleaning base operably coupled to the upright body, an agitator on the cleaning base, a supply tank adapted to hold a supply of cleaning fluid, a fluid dispenser on the cleaning base, the fluid dispenser in fluid communication with the supply tank, a recovery pathway, a suction source configured to generate a working airstream through the recovery pathway, a suction inlet port provided with the cleaning base and in fluid communication with the suction source, a recovery tank removably mounted on from the frame and forming a portion of the recovery pathway, the recovery tank including a tank container comprising an opening at an upper end thereof and a tank cover closing the opening at an upper end thereof, the tank cover comprising a recess and an air outlet through which the working airstream passes to exit the recovery tank, a filter fluidly downstream of the air outlet, the filter comprising an upstream side and a downstream side through which the working airstream sequentially passes, and a filter mount coupled to one of the tank cover and the frame, the filter mount configured to support the filter and having a nested position in which the upstream side of the filter faces the air outlet and is hidden from view and an exposed position in which the upstream side of the filter is visible (e.g., from a user's perspective looking at and/or down at the recovery tank), wherein the filter mount is configured to automatically move from the nested position to the exposed position in response to disassembly of the recovery tank from the frame, whereby a user can visually inspect the upstream side of the filter to determine the dirtiness of the filter (e.g., without removing the filter from the filter mount).

According to still another aspect of the disclosure, a method for servicing a surface cleaning apparatus with a filter is provided herein.

These and other features and advantages of the present disclosure will become apparent from the following description of particular embodiments, when viewed in accordance with the accompanying drawings and appended claims.

Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. In addition, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components. Nor should the use of enumeration be construed as excluding from the scope of the invention any additional steps or components that might be combined with or into the enumerated steps or components. Any reference to claim elements as "at least one of X, Y and Z" is meant to include any one of X, Y or Z individually, and any combination of X, Y and Z, for example, X, Y, Z; X, Y; X, Z; and Y, Z.

### DESCRIPTION OF THE DRAWINGS

FIG. 1 is a perspective view of a surface cleaning apparatus having a filter according to one aspect of the disclosure, showing the apparatus in an upright or storage position;
FIG. 2 is a schematic view of various functional systems of the apparatus;
FIG. 3 is a cross-sectional view of the apparatus taken through line III-III of FIG. 1, showing the apparatus in a reclined or use position;
FIG. 4 is a close-up, cross-sectional view of the base, taken through line III-III of FIG. 1;
FIG. 5 is a rear perspective view showing supply and recovery tanks exploded from an upright body of the apparatus, with a filter of the recovery tank moved to an exposed position by a filter pop-out mechanism;
FIG. 6 is a partially exploded perspective view of a recovery tank of the apparatus;
FIG. 7 is a side cross-sectional view of the recovery tank;
FIG. 8 is a front cross-sectional view of the recovery tank;
FIG. 9 is a perspective view of the apparatus showing a user unlatching the recovery tank from a tank receiver;
FIG. 10 is a perspective view of the apparatus showing a user unlatching removing the recovery tank from the tank receiver and the filter automatically beginning to pop up from the recovery tank;
FIG. 11 is a perspective view showing a user resting the recovery tank on a surface and the filter in the exposed position;
FIG. 12 is a perspective view showing removal of the filter from the recovery tank;
FIG. 13 is a partially exploded perspective view of a portion of a recovery tank according to another aspect of the disclosure;
FIG. 14 is a partially exploded perspective view of a recovery tank according to yet another aspect of the disclosure;
FIG. 15 is a perspective view of the recovery tank of FIG. 14, showing the movement of the filter to the exposed position;
FIG. 16 is a perspective view of a recovery tank according to still another aspect of the disclosure, showing the recovery tank removed and a filter of the recovery in a nested position;
FIG. 17 is a perspective view of the recovery tank of FIG. 16, showing the filter translated away from the recovery tank by a filter pop-out mechanism;
FIG. 18 is a perspective view of the recovery tank of FIG. 16, showing the filter flipped over to display an upstream side of the filter by the filter pop-out mechanism;
FIG. 19 is a perspective view of the recovery tank of FIG. 16, showing removal of the filter from the recovery tank;
FIG. 20 is a perspective view of a surface cleaning apparatus according to a further aspect of the disclosure, showing the recovery tank removed from the apparatus; and
FIG. 21 is a perspective view of a surface cleaning apparatus according to yet a further aspect of the disclosure, showing the recovery tank and filter in a dry-out position.

### BRIEF DESCRIPTION

The invention generally relates to a surface cleaning apparatus with a serviceable filter, and may be in the form of a wet/dry vacuum cleaner or wet/dry multi-surface cleaner that can be used to clean hard floor surfaces such as tile and hardwood and soft floor surfaces such as area rugs and carpet. Aspects of the disclosure described herein further relate to a pop-up filter that shows the upstream or "dirty" side of the filter to a user automatically when a recovery tank is removed from its operational position on the apparatus. At least some embodiments of the surface cleaning apparatus provided herein function through the various elements thereof, as described below, to make the clean-out process easier, by providing a mechanism that automatically exposes the downstream side of the filter in response to removal of the recovery tank from the apparatus. At least some embodiments of the surface cleaning apparatus provided herein function through the various elements thereof, as described below, to provide improved serviceability to a filter. While discussed primarily in terms of a multi-surface wet/dry cleaner, it is understood that the pop-up filter can be applied to other floor care products, including, but not limited to, any floor care product having a removable container that collects dirt and/or liquid. As such, certain features of the surface cleaning apparatus may be considered functional, but may also be implemented in different aesthetic configurations.

As used herein, the term "upstream" refers to a direction or location that is more toward the air inlet of the recovery system of the surface apparatus, and the term "downstream" refers to a direction or location that is more toward the air outlet of the recovery system of the surface cleaning apparatus. In operation, a working airstream flows sequentially through the furthest upstream component and then through progressively further downstream components of the recovery system, whereupon the working airstream is finally exhausted through an air outlet of the surface cleaning apparatus into the ambient surrounding atmosphere.

As used herein, the term "user disassembly" and variations thereof refers to intentional disassembly by an end user of the surface cleaning apparatus without the use of destructive forces, including disassembly or removal of various components with or without the use of commonplace household tools. Unless otherwise noted, user disassembly of components from the surface cleaning apparatus includes the ability for such components to be reassembled to the surface cleaning apparatus.

As used herein, the term "debris" includes dirt, soil, dust, hair, stains, and other debris, unless otherwise noted.

The functional systems of the surface cleaning apparatus can be arranged into any desired configuration, such as an upright device having a base and an upright body for directing the base across the surface to be cleaned, a portable device adapted to be hand carried by a user, a canister device having a cleaning implement connected to a wheeled base by a vacuum hose, an autonomous or robotic device having an autonomous drive system and an autonomously moveable housing, or a commercial device. Any of the aforementioned cleaners can be adapted to include a flexible vacuum hose, which can form a portion of a conduit between a nozzle and a suction source. As used herein, the terms "wet/dry vacuum cleaner" or "wet/dry multi-surface cleaner "includes a vacuum cleaner that can be used to clean hard floor surfaces such as tile and hardwood and soft floor surfaces such as carpet.

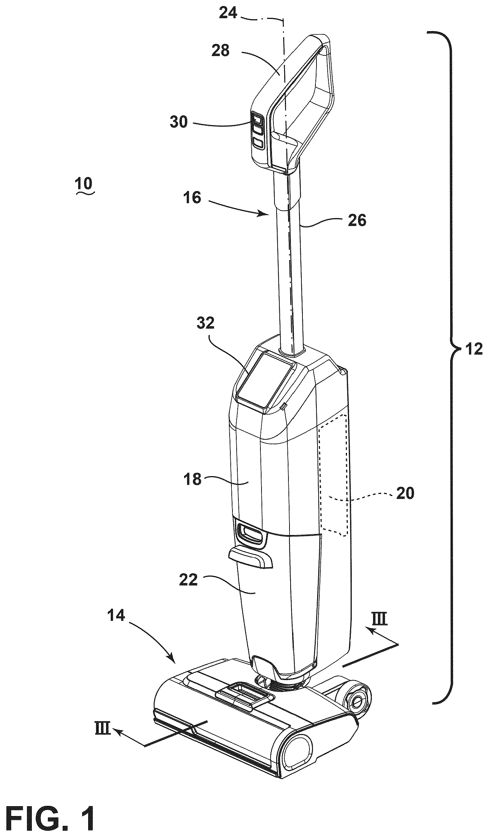

FIGS. 1-2 show a surface cleaning apparatus 10 having a filter according to one aspect of the present disclosure. The apparatus 10 and filter are provided with various features and improvements, which are described in further detail below. The apparatus 10 can include at least one cleaning system, such as a fluid delivery system or a recovery system. With both fluid delivery and recovery systems, the apparatus 10 can deliver cleaning fluid to the surface to be cleaned and can recover fluid and debris from the surface to be cleaned.

As illustrated herein, the apparatus 10 can be an upright multi-surface wet/dry vacuum cleaner having a housing that includes an upright handle assembly or body 12 and a floor cleaning nozzle or base 14 comprising a cleaning foot or base mounted to or coupled with the upright body 12 and adapted for movement across a surface to be cleaned. The various cleaning systems and components thereof can be supported by either or both the base 14 and the upright body 12. It is noted that while the base 14 is referred to herein as a "floor" cleaning base, the base 14 according to at least some aspects of the disclosure may be usable to clean non-floor surfaces, such as upholstery and furniture.

For purposes of description related to the figures, the terms "upper," "lower," "right," "left," "vertical," "horizontal," "inner," "outer," and derivatives thereof shall relate to the disclosure as oriented in FIG. 1 with the cleaning base on a surface to be cleaned and from the perspective of a user behind the apparatus 10, which defines the rear of the apparatus 10. As used herein, the terms "front" and "back" and derivatives thereof are used relative to a direction that a user pushes the cleaning base on a surface being cleaned (i.e., back to front). However, it is to be understood that the disclosure may assume various alternative orientations, except where expressly specified to the contrary.

The upright body 12 can comprise a handle 16 and a frame 18. The frame 18 can comprise a main support section at least partially supporting a source of cleaning fluid, such as a supply tank 20 and a recovery tank 22, and may further support additional components of the body 12, including, but not limited to, a battery 66. The apparatus 10 can include a fluid delivery or supply pathway, including and at least partially defined by the supply tank 20, for storing cleaning fluid, e.g. cleaning liquid, and delivering the cleaning fluid to the surface to be cleaned and a recovery pathway, including and at least partially defined by the recovery tank 22, for removing liquid and debris from the surface to be cleaned and storing the liquid and debris until emptied by the user.

The handle 16 can include a handle tube 26 having a hand grip 28 at an upper end thereof. The handle tube 26 can extend upwardly from the frame 18, and may be elongated to define a longitudinal handle axis 24. Various configurations for the hand grip 28 are possible, including a loop-shaped grip as shown, or a non-looped, stick-like grip.

The apparatus 10 can include at least one user interface ("UI") through which a user can interact with the apparatus 10 to accomplish one or more functions. The UI can, among other abilities, accept user inputs for controlling the cleaning system and/or function as a communication output device for the cleaning system. To accept user inputs, the UI can have at least one user input control operably connected to one or more components or systems of the apparatus 10 to affect and control its operation. Non-limiting examples of input controls include buttons, triggers, toggles, keys, switches, or the like, or any combination thereof. To communicate output to the user, the UI can have at least one status indicator, or a status display including a plurality of status indicators, which communicates a condition or status of the apparatus 10, including systems and components thereof, to the user. Non-limiting examples of status indicators include visual indicators such as lights (e.g., LEDs), icon displays, textual displays, graphical displays, or the like, or any combination thereof. The UI can also include an auditory output component, such as a speaker.

In some embodiments, the apparatus 10 may include a first UI 30 and a second UI 32. In one non-limiting example, the first UI 30 can be an input UI configured to accept user inputs to control the apparatus 10, including systems or components thereof and the second UI 32 can be an output UI configured to indicate status information relating to the apparatus 10, including systems or components thereof.

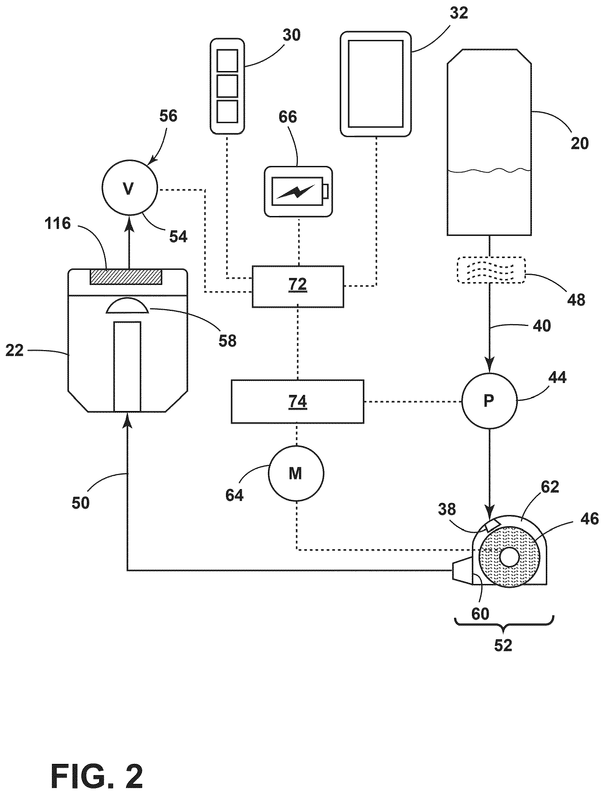

FIG. 2 is a schematic view of various functional systems of the apparatus 10. The delivery system includes the supply tank 20 configured to hold a cleaning fluid, at least one fluid dispenser 38 supplied with cleaning fluid from the supply tank 20, and a fluid supply path 40 from the supply tank 20 to the fluid dispenser 38.

The supply tank 20 can store cleaning fluid in liquid form. The cleaning fluid can comprise one or more of any suitable cleaning fluids, including, but not limited to, water, compositions, concentrated detergent, diluted detergent, other surface cleaning and/or treatment agents, and mixtures thereof. For example, the cleaning fluid can comprise water. In another example, the cleaning fluid can comprise a mixture of water and concentrated detergent.

It is noted that while the apparatus 10 described herein is configured to deliver a cleaning liquid, aspects of the disclosure may be applicable to surface cleaning apparatus that deliver steam. Thus, the term "cleaning fluid" may encompass liquid, steam, or both, unless otherwise noted.

The delivery system can include a flow controller for controlling the flow of fluid from the supply tank 20 to the fluid dispenser 38. In one configuration, the flow controller can comprise a pump 44, which pressurizes the supply path 40 and controls the delivery of cleaning fluid to the fluid dispenser 38. In one example, the pump 44 can be a centrifugal pump. In another example, the pump 44 can be a solenoid pump having a single, dual, or variable speed.

The release of cleaning fluid from the dispenser 38 can be controlled manually by the user, or automatically by selection of a cleaning mode. As described in further detail below, in some embodiments, operation of the pump 44 can be mode-dependent, such that the release of cleaning fluid from the dispenser 38 is controlled automatically. In other words, depending on a selected cleaning mode of the apparatus 10, the pump 44 may or may not be activated.

In another configuration of the supply pathway, the pump 44 can be eliminated and the flow control system can comprise a gravity-feed system having a valve fluidly coupled with an outlet of the supply tank 20, whereby when valve is open, cleaning fluid will flow under the force of gravity to the dispenser 38.

The dispenser 38 can comprise various structures, such as a nozzle, a spray tip, or a manifold, and can comprise at least one fluid outlet for dispensing cleaning fluid to the surface to be cleaned. The dispenser 38 can be positioned to deliver cleaning fluid directly to the surface to be cleaned, or indirectly by delivering cleaning fluid onto an agitator, such as, but not limited to, at least one brushroll 46. In one non-limiting example, the dispenser 38 delivers cleaning fluid onto a horizontally-rotatable brushroll 46.

The delivery system can include other conduits, ducts, tubing, hoses, connectors, valves, etc. fluidly coupling the components of the delivery system together and providing the supply path 40.

Optionally, a heater 48 can be provided for heating the cleaning fluid prior to delivering the cleaning fluid to the surface to be cleaned. In one example, an in-line heater 48 can be located downstream of the supply tank 20, and upstream or downstream of the pump 44. Other types of heaters can also be used. In yet another example, the cleaning fluid can be heated using exhaust air from a motor cooling air path for a suction source of the recovery system. In yet another example, the cleaning fluid is unheated.

In the embodiment shown in FIG. 2, the delivery system includes a single supply tank 20 for storing a supply of cleaning fluid. In another embodiment, the delivery system can have an additional supply container (not shown) for storing another cleaning fluid. For example, the supply tank 20 can store water and the second supply container can store a cleaning agent such as detergent. In embodiments where multiple supply containers are provided, the apparatus 10 can have a mixing system for controlling the composition of the cleaning fluid that is delivered to the surface.

The recovery system can include a recovery pathway 50 through the apparatus 10 having a path inlet 52 and a path outlet (not shown), a suction source 54 including a vacuum motor 56 in fluid communication with the path inlet and configured to generate a working airstream through a recovery pathway 50, and the recovery tank 22 for separating and collecting liquid and debris from a working airstream for later disposal. A separator 58 can be formed in a portion of the recovery tank 22 for separating liquid and entrained debris from the working airstream.

The recovery tank 22 can include at least one filter 116 for separation of debris from the working airstream. In operation, the working airstream (including or comprising working air) passes through the filter 116 and to the suction source 54. The filter 116 is serviceable and the apparatus 10 according to various aspects of the disclosure described in more detail below, can include a filter pop-out mechanism configured to "pop out" the filter 116 upon removal of the recovery tank 22 from the apparatus 10 to expose an upstream, or dirty side of the filter to a user's view.

In one embodiment, the path inlet 52 is disposed on the base 14 and can be defined by a suction inlet port 60 and/or a brush chamber 62 disposed on the cleaning head or base 14. One or both of the suction inlet port 60 and brush chamber 62 can be formed at least in part by a suction nozzle, a brush cover, or a combination thereof.

The apparatus 10 can include at least one agitator to agitate the surface to be cleaned. In one embodiment, the agitator is a rotating brushroll 46. In one non-limiting example, the suction inlet port 60 is positioned in close proximity to the brushroll 46 to collect liquid and debris directly from the brushroll 46. Other examples of agitators include, but are not limited to, dual horizontally-rotating brushrolls, one or more vertically-rotating brushes, a stationary brush, or a cleaning pad.

A drive assembly including a brushroll motor 64 can drive the brushroll 46. A drive transmission (not shown) operably connects the motor 64 with the brushroll 46 for transmitting rotational motion of the motor 64 to the brushroll 46. In other embodiment, a drive transmission can operably connect the brushroll 46 with the vacuum motor 56 to transmit rotational motion of the motor 56 to the brushroll 46.

Electrical components of the apparatus 10, including the pump 44, vacuum motor 56, brushroll motor 64, or any combination thereof, are electrically coupled to a power source, which can comprise a battery 66 for cordless operation, preferably a rechargeable battery. In one example, the rechargeable battery 66 is a lithium ion battery. The rechargeable battery can by recharged in place on the apparatus 10, or can be removed from the apparatus 10 for recharging. In another exemplary configuration, the battery 66 can comprise a user replaceable battery. In yet another embodiment, the power source can comprise power cord adapted to be plugged into a household electrical outlet for corded operation.

A tray (not shown) can store the apparatus 10 and recharge the battery 66. The tray can be configured to dock the base 14 of the floor cleaner 10 with the upright body 12 in a generally upright, stored position. The tray can further be configured for further functionality, such as to self-clean the apparatus 10.

The apparatus 10 can include a central controller 72 operably coupled with the various systems and components of the apparatus 10. In one embodiment the central controller 72 can comprise a printed circuit board ("PCB"). As used herein, unless otherwise noted, the term "PCB" includes a printed circuit board having a plurality of electrical and electronic components that provide operational control to the apparatus 10. The PCB includes, for example, a processing unit (e.g., a microprocessor, a microcontroller, or another suitable programmable device) and a memory (e.g., a read-only memory ("ROM"), a random access memory ("RAM"), an electrically erasable programmable read-only memory ("EEPROM"), a flash memory, or another suitable magnetic, optical, physical, or electronic memory device). The processing unit is connected to the memory and executes instructions (e.g., software) that is capable of being stored in the RAM (e.g., during execution), the ROM (e.g., on a generally permanent basis), or another non-transitory computer readable medium such as another memory or a disc. Additionally or alternatively, the memory is included in the processing unit (e.g., as part of a microcontroller). Software stored in memory includes, for example, firmware, program data, one or more program modules, and other executable instructions. The processing unit is configured to retrieve from memory and execute, among other things, instructions related to the control processes and methods described herein. The PCB can also include, among other things, a plurality of additional passive and active components such as resistors, capacitors, inductors, integrated circuits, and amplifiers. These components are arranged and connected to provide a plurality of electrical functions to the PCB including, among other things, signal conditioning or voltage regulation. For descriptive purposes, a PCB and the electrical components populated on the PCB are collectively referred to as a controller. Thus, the central PCB and the electrical components populated on the central PCB may be referred to as central controller 72.

Optionally, a base controller 74, alternatively referred to herein as base PCB, can operably couple the central controller 72 with electrical components within the base 14 of the apparatus 10, such as the pump 44 and brush motor 64. In other embodiments, a separate base PCB is not included with the apparatus 10.

In one aspect of the disclosure, the apparatus 10 can have multiple, user-selectable cleaning modes, such as at least one wet cleaning mode, at least one dry cleaning mode, and a self-cleaning mode. The modes can have associated operating parameters for the pump 44, vacuum motor 56, and/or brushroll motor 64. In one embodiment, the apparatus 10 has multiple dry cleaning modes and multiple wet cleaning modes, and these cleaning modes may include a dry vacuuming mode, a hard floor wet mode, an area rug wet mode, and at least one turbo mode.

Table 1 below lists some non-limiting examples of operating parameters for the modes. Other operating parameters for the modes and other cleaning modes are possible.

**TABLE 1**

| Mode | Pump | Vacuum Motor | Brush Motor |
|---|---|---|---|
| Dry Vacuuming | OFF | LOW | LOW |
| Turbo Dry | OFF | HIGH | HIGH |
| Hard Floor Wet | LOW | LOW | LOW |
| Area Rug Wet | HIGH | MED | LOW |
| Turbo Wet | MED | HIGH | HIGH |
| Self-Cleaning | HIGH | LOW | LOW |

Table 2 below lists some non-limiting examples of operating parameter values for the modes, including a preferred value and a range for some parameters. Other operating parameters for the modes are possible.

**TABLE 2**

| Mode | Pump Flow Rate (ml/min) | | Vacuum Motor Suction Power (W) | Brush Motor Speed (RPM) | |
|---|---|---|---|---|---|
| Dry Vacuuming | 0 | 0 | 90 | 900 | 750-1100 |
| Turbo Dry | 0 | 0 | 150 | 1100 | 900-1100 |
| Hard Floor Wet | 40 | 30-50 | 90 | 900 | 750-1100 |
| Area Rug Wet | 100 | 75-100 | 110 | 900 | 750-1100 |
| Turbo Wet | 75 | 75-100 | 150 | 1100 | 900-1100 |
| Self-Cleaning | 100 | 75-100 | 90 | 900 | 750-1100 |

In all wet cleaning modes (e.g., user-operated or attended modes), the release of cleaning fluid can be continuous or automatic, e.g., does not require pressing a trigger, and may be controlled based on floor type. In an alternative embodiment, the user can manually control release of cleaning fluid, for example using a trigger. In the unattended self-cleaning mode, the release of cleaning fluid is automatic.

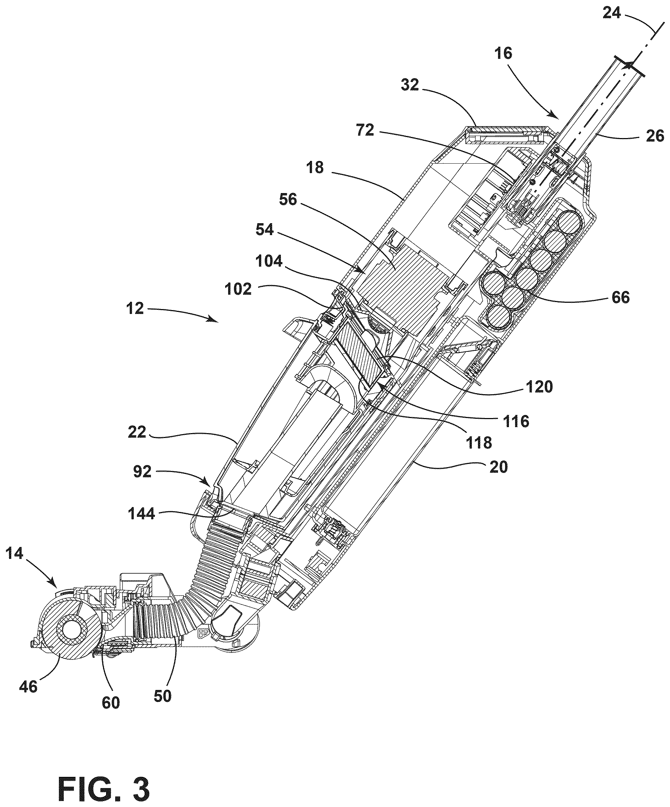

FIG. 3 shows an architectural layout for the upright body 12, including locations and relative positions for components of the supply and recovery systems. Components including the supply tank 20, recovery tank 22, battery 66, vacuum motor 56, central controller 72, and display UI 32 are included on the upright body 12. The components of the upright body 12 are arranged with relative positioning that is well-balanced, comfortable for the user to operate, and provides protection for electronic components. For example, the tanks 20, 22 are disposed in a lower end of the frame 18 and the motor 56 and battery 66 are disposed in an upper end of the frame 18 to arrange these components in a generally linear, stacked orientation to provide a compact spatial arrangement for the upright body 12 that is comfortable to hold in a reclined use position. The recovery tank 22 is disposed on a lower forward side of the frame 18 and the supply tank 20 is disposed on a rearward side of the frame 18. The vacuum motor 56 is disposed above the recovery tank 22, generally on the forward side of the frame 18. Other arrangements of the components of the apparatus 10 are possible, while maintaining a well-balanced and comfortably operable apparatus 10, and isolated electronic components.

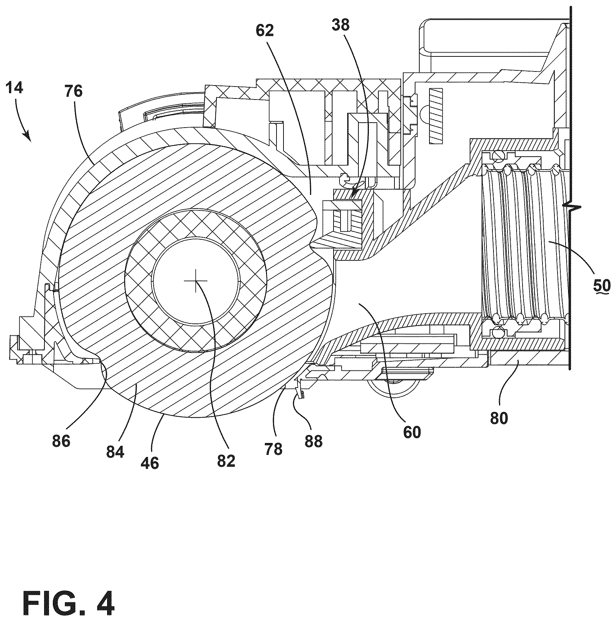

FIG. 4 shows an architectural layout for the base 14. The base 14 can include a nozzle housing 76 having an elongated suction opening 78 to the brushroll chamber 62 on an underside 80 of the housing 76. The agitator 46 is rotatably mounted in the chamber 62 and rotates about an axis 82. The chamber 62 and/or the suction opening 78 is/are fluidly coupled to the suction inlet port 60, which leads to the suction source 54 (FIG. 3). The suction inlet port 60 can be disposed rearwardly of the brushroll 46. In one non-limiting example, the suction inlet port 60 is positioned in close proximity to the brushroll 46 to collect liquid and debris directly from the brushroll 46. With the agitator chamber 62 being open to the surface to be cleaned via the suction opening 78, some liquid and debris may be extracted from the surface to be cleaned as well. As such, the agitator chamber 62 can form a portion of the recovery pathway 50, with the suction inlet port 60 being open to the chamber 62. Although an embodiment of the base 14 is described herein for illustrative purposes, the base 14 and components thereof may have other shapes and configurations. In other embodiments, the brushroll 46 may be outside the recovery pathway, for example to mop the floor surface, with the suction inlet port 60 positioned to recover liquid and debris directly from the floor surface.

At least a portion of the brushroll 46 extends through the suction inlet opening 78 to agitate the surface to be cleaned. For example, the brushroll 46 can include an agitation material 84 extending through the suction inlet opening 78. In one embodiment, the agitation material is microfiber. The microfiber can be constructed of polyester, polyamides, or a conjugation of materials including polypropylene, or any other suitable material known in the art from which to construct microfiber. In another embodiment, the brushroll 46 can be a hybrid brushroll, with agitation materials comprising a combination of microfiber and bristles for agitation. While a single horizontally-rotating brushroll 46 is shown herein, in some embodiments, multiple horizontally-rotating brushrolls or one or more vertically-rotating brushrolls can be provided on the apparatus 10.

An interference wiper 86 is mounted at a forward portion of the brush chamber 62 and is configured to interface with a portion of the brushroll 46, which can scrape any excess liquid off the brushroll 46 and/or evenly spread or distribute cleaning fluid across the width of the brushroll prior to reaching the surface to be cleaned. The wiper 86 can be rigid, i.e., stiff, and non-flexible, so the wiper 86 does not yield or flex by engagement with the brushroll 46. Optionally, the wiper 86 can be formed of rigid thermoplastic material, such as poly(methyl methacrylate) (PMMA), polycarbonate, or acrylonitrile butadiene styrene (ABS). In other embodiments, the wiper 86 can be flexible.

A squeegee 88 is mounted behind the brushroll 46 and the brush chamber 62 and is configured to contact the surface as the base 14 moves across the surface to be cleaned. The squeegee 88 wipes residual liquid from the surface to be cleaned so that it can be drawn into the recovery pathway via the suction inlet port 60, thereby leaving a moisture and streak-free finish on the surface to be cleaned. The squeegee 88 can be pliant, i.e., flexible or resilient, in order to bend readily according to the contour of the surface to be cleaned yet remain undeformed by normal use of the apparatus 10. Optionally, the squeegee 88 can be formed of a resilient polymeric material, such as ethylene propylene diene monomer (EPDM) rubber, polyvinyl chloride (PVC), a rubber copolymer such as nitrile butadiene rubber, or any material known in the art of sufficient rigidity to remain substantially undeformed during normal use of the apparatus 10.

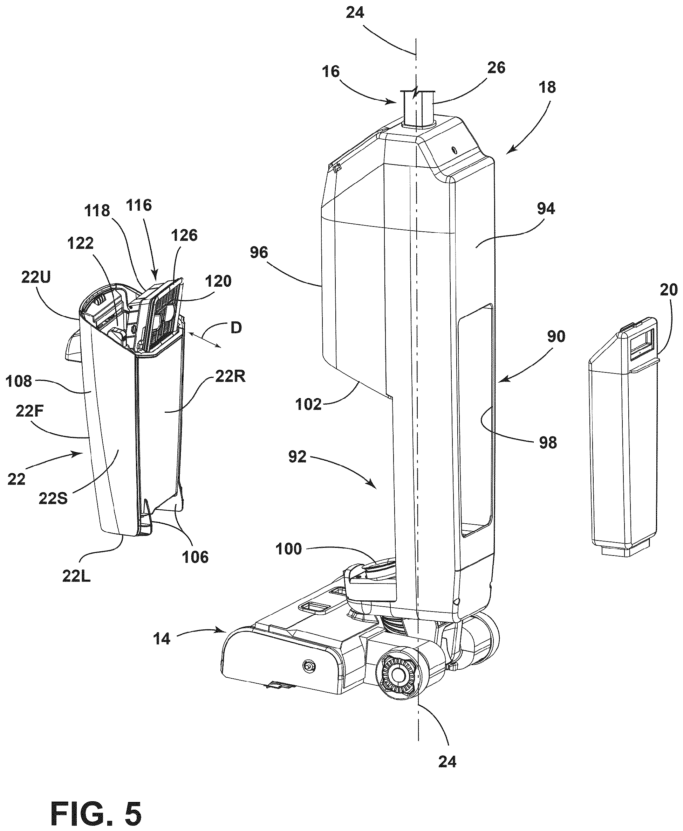

FIG. 5 is a rear perspective view showing the tanks 20, 22 exploded from the upright body 12. The tanks 20, 22 can be mounted to the frame 18 in any configuration. In the present embodiment, the tanks 20, 22 are removable from the frame 18 for filling/emptying. The upright body 12 comprises tank sockets or receivers 90, 92 for respectively receiving the supply and recovery tanks 20, 22. As shown herein, in one embodiment the tank receivers 90, 92 can be defined by portions of the frame 18, and can be provided on opposing sides of the frame 18, and more particularly on a rear side 94 and a front side 96 of the frame 18, respectively.

The supply tank 20 can be removably mounted at the rear of the frame 18 such that the supply tank 20 is through the rear side 94 of the frame 18. The supply tank receiver 90 has an access opening 98 at the rear side 94, and the supply tank 20 is loaded and unloaded through the access opening 98. With this configuration, a user can easily load and upload the supply tank 20 from a typical operating position behind the apparatus 10.

The recovery tank receiver 92 can be disposed generally in front of the supply tank receiver 90 and can include a recovery tank support 100 on which the tank 22 rests and a ceiling 102 generally opposite the support 100. In one embodiment, the recovery tank receiver 92 can have open front and lateral sides, such that front and lateral sides 22F, 22S of the recovery tank 22 are visible and form external surfaces of the apparatus 10 when the tank 22 is seated in the receiver 92. With this configuration, a user can easily observe the contents of the tank 22 from various perspectives and with the upright body 12 in various reclined use positions. In other embodiments, more or less of the tank 22 may be visible when the tank 22 is seated in the receiver 92.

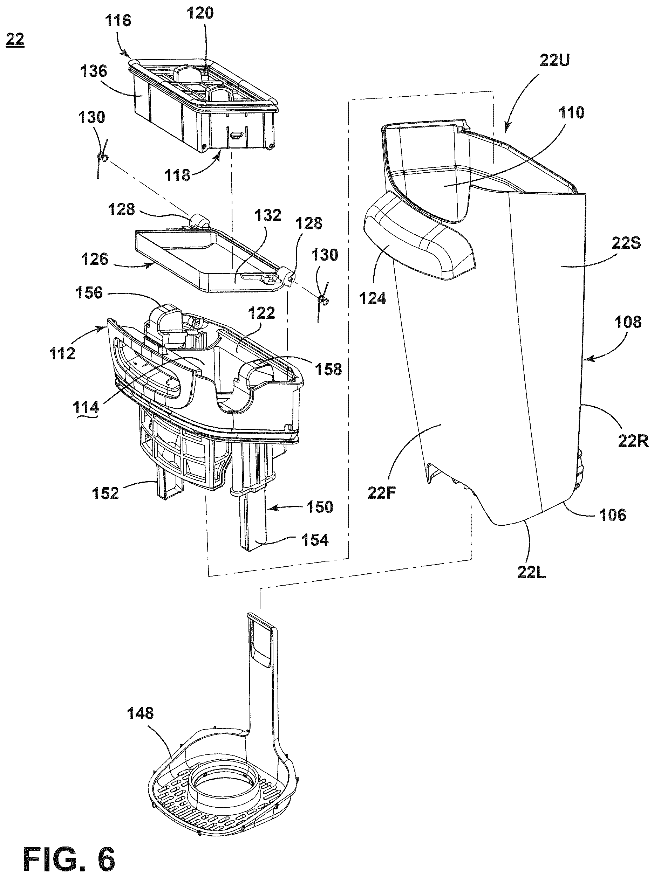

FIG. 6 is a partially exploded perspective view of one embodiment of the recovery tank 22. The recovery tank 22 can generally have a front side 22F, and a rear side 22R, spaced lateral sides 22S, an upper end 22U, and a lower end 22L. The recovery tank 22 can include a recovery tank container 108, which forms a collection chamber 110 for the recovery system. The recovery tank 22 can include a tank cover 112 at the upper end 22U. The tank cover 112 can define a lid sized for receipt on the tank container 108. The cover 112 at least partially encloses an open top of the tank container 108, and can further define an air outlet 114 of the recovery tank 22 leading to the downstream suction source 54 (FIG. 3).

In one embodiment, the tank 22 can have a flat portion 106 at the lower end 22L thereof on which the tank 22 can rest on horizontal surface when it is removed from the floor cleaner 10. With the flat portion 106 at the lower end 22L, the tank 22 can sit upright on its own, e.g., in an orientation where the upper end 22U is above the lower end 22L.

In one embodiment, the tank 22 can have a hand grip 124 for a user to hold the tank 22 by when it is being removed (e.g., disassembled) from or installed on the floor cleaner. The hand grip 124 can be disposed at or near the upper end 22U and may project from the front side 22F. Various configurations for the hand grip 124 are possible, including a cup-shaped grip as shown, or a non- cup-shaped grip.

The recovery tank 22 can include at least one filter 116 for separation of debris from the working airstream. In one embodiment, the filter 116 is provided at the air outlet 114, and may in particular be provided on a downstream side of the air outlet 114. The filter 116 is upstream of the vacuum motor. The filter 116 includes an upstream side 118 and a downstream side 120 through which working air sequentially passes. In operation, working air passes sequentially from the air outlet 114, through the upstream side 118, through the downstream side 120, and to the suction source 54 (FIG. 3). With reference to FIG. 3, in one non-limiting example, an outlet conduit 104 is in fluidic communication with the filter 116 on the downstream side 120 thereof to conduct working air that has been filtered by the filter 116 toward the suction source 54. The outlet conduit 104 can open to or extend through the ceiling 102 of the tank receiver 92.

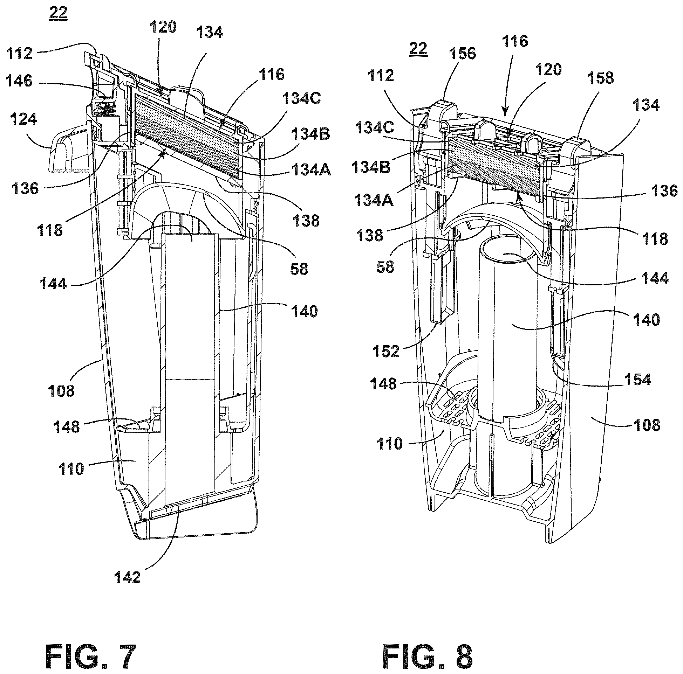

Returning to FIG. 6, the filter 116 can be supported by the cover 112. In one embodiment, the cover 112 includes a recess 122 on an upwardly-facing side thereof that is sized to accommodate the filter 116 in a nested position. The air outlet 114 can be disposed within and/or defined by the recess 122. For example, the air outlet 114 can include at least one opening through a bottom of the recess 122. The recess 122 may be a concave portion of the cover 112 sized to at least partially receive the filter 116 in the nested position, an example of which is shown in FIGS. 7-8.

The filter 116 is serviceable, which means a user can access the filter 116 through user disassembly of one or more components of the apparatus 10. The filter 116 can be rinsed or cleaned, and reassembled in place on the apparatus 10. Eventually, the filter 116 can be replaced with a new filter after multiple washes. Alternatively, the filter 116 can be disposed of after one use.

According to one aspect of the disclosure, the filter 116 can automatically move from a nested position within the recess 122 and an exposed position in which the filter 116 is at least partially outside the recess 122. In the exposed position, the upstream side 118 of the filter 116 is visible (e.g., from a user's perspective looking at and/or down at the recovery tank) and a user can visually inspect the upstream side 118 to determine the dirtiness of the filter 116. More specifically, in the exposed position, the upstream side 118 of the filter 116 is viewable from a user's vantage point without the user having to move or remove any portion of the filter 116 or tank 22. Because the upstream side 118 of the filter 116 is the first portion of the filter 116 exposed to working air during operation, it tends to capture more dirt than other portions of the filter 116, such as the downstream side 120. By visually inspecting the upstream side 118, a user can determine the dirtiness of the filter 116. For example, the user can see whether the filter 116 is soiled or clogged with dirt and whether the filter 116 requires cleaning or replacement.

The recovery tank 22, according to one aspect of the disclosure, can include a filter pop-out mechanism configured to "pop out" the filter 116 upon removal of the recovery tank 22 from the upright body 12 to place it in the exposed position. So upon removing the tank 22, the filter 116 automatically pops out of the cover 112 to display the upstream side 118 and a user can visually inspect the upstream side 118 to determine the dirtiness of the filter 116. The pop-up filter 116 offers a distinct advantage over other known configurations, which commonly hide the upstream side of the filter within a filter housing and only expose the downstream side of the filter, which does not readily reveal the dirtiness of the filter. A user can immediately observe the condition of the upstream side 118 of the filter 116 without having to touch the filter 116 or any other dirty components of the apparatus 10. Another benefit is that the "pop out" the filter 116 may speed air-drying of the tank 22, cover 112, and filter 116. Even with the cover 112 and filter 116 still on the tank 22, the position of the filter 116 relative to the other components of the tank 22 exposes more parts of the tank 22 to air, allowing air to circulate through and around the tank 22 in paths that are not present when the tank 22 is assembled on the apparatus 10.

An example of the exposed position is shown in FIG. 5. An example of the nested position is shown in FIG. 3. Installing the recovery tank 22 on the frame 18 may automatically move the filter 116 to its nested position. For example, the filter 116 can be pushed to and/or held in the nested position by a portion of the frame 18. In one embodiment, an edge of the frame 18 defining an upper edge of the tank receiver 92 and/or a forward edge of the ceiling 102, can be positioned to engage the filter 116 and push it toward the nested position.

Referring to FIGS. 5-6, in one embodiment, a filter mount 126 is coupled with the tank cover 112 and supports the filter 116 on the tank 22. The filter mount 126 is pivotally coupled with the tank cover 112 by a hinge 128 and is biased toward the exposed position. In the nested position, the filter mount 126 is received within the recess 122 and the upstream side 118 of the filter 116 faces a bottom of the recess 122. The downstream side 120 of the filter 116 faces upwardly. In the exposed position, the filter mount 126 is at least partially outside the recess 122.

The pop-out mechanism may include at least one spring 130 in communication with the filter mount 126, and wherein the spring 130 imparts a permanent bias on the filter mount 126 toward the exposed position. The filter mount 126 can have a first end pivotally mounted to the cover 112 through the hinge 128. The biasing spring 130 is disposed between the cover 112 and the filter mount 126, and forces the filter mount 126 to swing on the hinge 128 in an outward direction from the recess 122. In the embodiment shown, the hinge 128 is oriented toward the rear side 22R of the tank 22 such that the filter 116 pivot up and away from the front side 22F of the tank 22. This presents the upstream side 118 of the filter 116 toward the front side 22F of the tank 22. In an alternative embodiment, the hinge 128 can be oriented toward one of the lateral sides 22S of the tank 22 such the filter 116 pivots on a side edge.

In one embodiment, the pop-out mechanism can include two springs 130 in communication with two pivot arms forming the hinge 128. The springs 130 may each impart a permanent bias on one of the pivot arms toward the exposed position. For example, the springs 130 may engagingly manipulate the pivot arms into the exposed position utilizing stored kinetic energy in the springs 130. In another embodiment, the pop-out mechanism can include only one spring or more than two springs biasing the filter mount 126 to the exposed position.

The filter mount 126 can be configured such that a user does not need to remove the filter mount 126 from the cover 112 in order to disassemble the filter 116 from the tank 22. The filter mount 126 is coupled to the cover 112, and the filter 116 is configured to slide into and out of the mount 126, or otherwise be inserted into and removable from the mount 126. In one embodiment, the filter mount 126 can include a filter frame 132 that is complementary in shape to the filter 116. For example, the filter 116 have a rectangular shape in plan view, through other shapes and configurations are possible. The filter frame 132 may surround all of or a portion of the filter 116, while allowing air to flow through the filter 116.

The filter frame 132 may be provided with rails or other guides for retaining the filter 116 within the filter frame 132. When the filter mount 126 is in the exposed position as shown in FIG. 5, the filter 116 is removable from and insertable into the filter frame 132 along insertion axis D, which can, for example, be perpendicular to the axis about which the filter mount 126 rotates, as defined by hinge 128. In another embodiment, not shown, the filter mount 126 can have an open side opposite the hinge 128, and the filter 116 can slide into the filter mount 126 through the open side. Yet other configurations for filter mount 126 are possible.

It is noted that in the present embodiment, the filter mount 126 is not configured for removal or disassembly by the user. Instead, the filter mount 126 pops out of the cover 112 so that the filter 116 is accessible for cleaning, servicing, and/or replacement. The filter mount 126 may be mounted to the cover 112 by fasteners or other fastening mechanisms including press-fits, snaps, clips, etc. In another embodiment, the mount 126 can be removable from the cover 112 by the user.

FG. 7 is a cross-sectional view of the recovery tank 22 taken through line III-III of FIG. 1. The filter 116 includes at least one filter media 134. The filter media 134 can, in some embodiments, define the upstream and downstream sides 118, 120 of the filter 116. The filter media 134 can comprise any non-porous, porous, a pleated, or non-pleated filter media. In the embodiment shown in FIG. 7, the filter media 134 includes a first porous foam layer 134A, a second porous foam layer 134B on a downstream side of the first porous foam layer 134A, and a non-woven layer 134C on a downstream side of the second porous foam layer 134B. The non-woven layer 134C can define at least a portion of the downstream side 120 of the filter 116, and the first porous foam layer 134A can define at least a portion of the upstream side 118 of the filter 116. A layered filter media may be preferred for a surface cleaning apparatus with dry vacuuming capability since it will not clog as quickly with dry debris as other filter media types. In another embodiment, the filter media 134 can comprise a single layer, such as a pleated filter media made of a material that remains porous when wet, or a double layer filter. In another example, the filter media can be a non-porous, pleated filter, such as a HEPA filter.

The filter 116 can include a filter cage 136 holding the filter media 134, and the cage 136 is preferably made a material that imparts rigidity to the filter 116. The filter cage 136 can have at least one opening at the upstream side 118 and at least one opening at the downstream side 120, which allows working air to pass through the filter media 134 retained within the cage 136. The cage 136 can be openable to access the filter media 134. In one embodiment, the cage 136 includes an openable door 138. Opening the door 138 allows the filter media 134 to be removed from the cage 136 for cleaning and/or replacement. Other enclosures for the filter media 134 are possible, including enclosures where the filter media 134 is not removable therefrom.

In one embodiment, the recovery tank 22 can include a hollow standpipe 140 therein. The standpipe 140 can be oriented such that it extends generally upwardly within the tank container 108 in the mounted position of the tank 22. The standpipe 140 forms a flow path between a tank inlet 142 formed at a lower end of the tank container 108 and an opening 144 at the upper end of the standpipe 140 within the interior of the tank container 108. When the recovery tank 22 is mounted to the frame 18 as shown in FIG. 3, the inlet 142 is aligned with the conduit 50 to establish fluid communication between the base 14 and the recovery tank 22. The standpipe 140 can be integrally formed with the tank container 108, or may be separated formed and attached thereto.

As mentioned above, the tank 22 can include a separator 58 configured to separate liquid and/or debris from a working airstream entering the recovery tank 22. The filter 116 is fluidly downstream of the separator 58 for separation of finer debris from the working airstream. In one embodiment, the separator 58 can comprise a baffle that guides the working airstream towards the interior tank volume near the front, rear and sides of the tank, where the velocity of the working airstream decreases such that the liquid and/or debris is separated out of the working airstream and collected in the collection chamber 110 near the sides and/or bottom of the tank 22. The baffle 58 can be positioned such that at least a portion of an incoming stream of dirty fluid will impact the baffle 58 upon exiting the standpipe 140. This may help cause the dirty fluid stream to change direction relatively quickly and reduce velocity, which may tend to help separate liquids and/or debris from the working airstream. The separated liquids and debris may collect in the container 108, while the remaining portion of the incoming working airstream can continue to the filter 116. Other separators are possible and are within the scope of the invention.

The filter mount 126 and baffle 58, if present, can be coupled with the cover 112 for removal therewith from the tank container 108. The filter mount 126 and baffle 58 are thereby independent of the tank container 108 and the standpipe 140. Removal of the cover 112 to empty the container 108 thereby removes the filter 116 and the baffle 58.

A recovery tank latch 146 can optionally be supported by the cover 112 for securing the recovery tank 22 to the upright body 12 within the recovery tank receiver 92 (FIG. 3). The latch 146 can be configured to releasably lock the recovery tank 22 to the upright body 12, such that a user must actuate the latch 146 before pulling the tank 22 off the frame 18. In another embodiment, the latch 146 can releasably latch or retain, but not lock, the tank 22 on the frame 18, such that a user can conveniently apply sufficient force to the tank 22 itself to pull the tank 22 off the frame 18.

The recovery tank 22 can further include a removable strainer 148 configured to strain large debris and hair out of the tank container 108 prior to emptying. The strainer 148 is configured to collect the large debris and hair while draining liquid and smaller debris back into the tank container 108. For purposes of this description, large debris are any debris with a maximum dimension, such as a length or diameter, of greater than or equal to 0.5mm to 6mm, and preferably 3mm, whereas small debris are any debris having a maximum dimension, such as a length or diameter, of less than that of the larger debris. An example of a piece of large debris includes a strand of hair with a length greater than 3mm. Examples of small debris include coffee grounds and crumbs with diameters less than 3mm.

In some embodiments, the recovery tank 22 can have an electronic liquid level sensing system 150 configured to detect liquid at one or more levels within the recovery tank 22 and determine when to shut-off or otherwise interrupt the recovery system. In addition, the sensing system 150 can detect whether the recovery tank 22 is missing from the apparatus 10. The sensing system 150 can include any suitable components for sensing liquid within the recovery tank 22. In another embodiment, instead of the electronic system 150, the tank 22 can comprise a float-style shut off.

In the illustrated example, the sensing system 150 includes sensors or probes 152, 154 that can detect liquid. The probes 152, 154 can be electrically coupled with power terminals 156, 158, optionally provided on the cover 112, which couple with electrical contacts (not shown) on the recovery tank receiver 92 when the recovery tank 22 is mounted on the frame 18 to supply power to the probes 152, 154. The electrical contacts on the recovery tank receiver 92 are electrically coupled with a power source of the apparatus 10, e.g., battery 66.

The probes 152, 154 can be supported by the cover 112, and can be offset from the standpipe 140 and/or separator, 58, if present. When the cover 112 is coupled to the container 108, the probes 152, 154 project into the collection chamber 110. It is further contemplated that sensors can be molded directly into the side walls of the container 108, thereby eliminating the probes.

The sensor probes 152, 154 are coupled with the controller 72 (FIG. 2). One sensor 152 can emit a liquid sensing signal that is detected by the other sensor 154. If the signal indicates that the liquid in the recovery tank 22 is at or above a critical level, the controller 72 can turn off the at least one electrical component of the apparatus 10. Such components can include the vacuum motor 56, and optionally also the pump 44 and/or the brush motor 64. In another configuration, the controller 72 can additionally or alternatively activate a shut-off valve (not shown) in response to the signal to prevent liquid ingress into the suction source 54.

With reference to FIGS. 7-8, a working air flow path through the tank 22, which defines a portion of the recovery pathway, is generally as follows. Working air, which may have entrained debris and/or liquid and comprise a debris-laden and/or liquid-laden air stream, enters through the standpipe 140 and encounters the baffle 58. Some debris and/or liquid may fall to the bottom of the tank 22 after directly impacting the baffle 58, while other debris and/or liquid may be separated by a reduction in air speed. Liquid and small debris collect the bottom of the tank 22, optionally below the strainer 148, although during some operations the liquid level may rise above the strainer 148. Large debris and hair is trapped above the strainer 148. After being deflected by the baffle 58, the working air proceeds upward toward the top of the container 108 and exits the container 108 through the cover 112. Fine debris is captured by the filter 116. Relatively clean, filtered, and/or liquid-free air passes to the suction source 54 (FIG. 3).

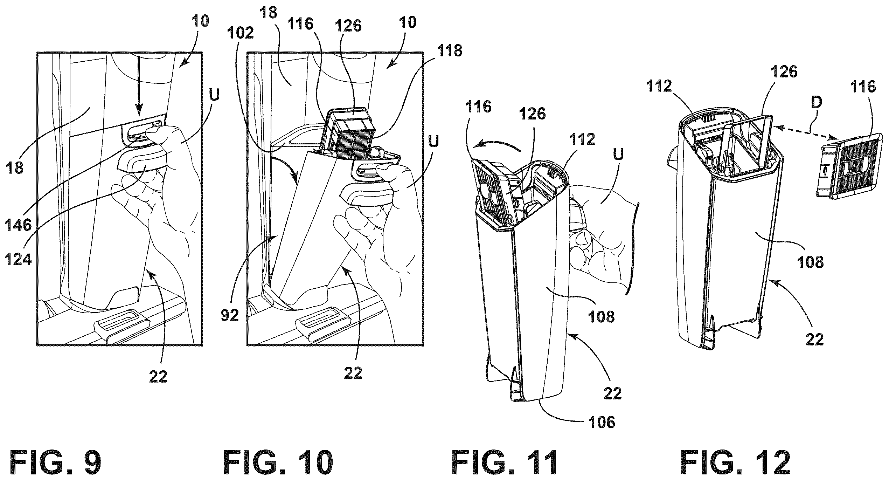

The recovery tank 22 can be periodically emptied of collected fluid and debris by removing the recovery tank 22 from the frame 18. User disassembly of the tank 22 may also be done to service the tank 22, including the filter 116. FIGS. 9-12 show steps for removing the tank 22 and servicing the filter 116 according to one aspect of the disclosure.

To disassemble the tank 22 from the frame 18, the latch 146 is first released, e.g., by a user U pressing down on the latch button as shown in FIG. 9. Conveniently, in one embodiment this can be done with one hand, with the user U gripping hand grip 124 with the fingers and/or palm, and operating the latch 146 with the thumb.

Next, the tank 22 is pivoted about its lower end to move the upper end of the tank 22 out of the tank receiver 92, e.g., forwardly away from the frame 18, as shown in FIG. 10. As the upper end of the tank 22 emerges from underneath the ceiling 102 of the tank receiver 92, the filter 116 automatically begins to open, e.g., pop up, under influence of the biasing mechanism.

Once the ceiling 102 of the tank receiver 92 is cleared, the filter 116 may fully open. The tank 22 can be pulled completely from the receiver 92 and optionally rested on a surface in an upright, non-spill position on the flat bottom 106 at the lower end of the tank 22, as shown in FIG. 11.

With the tank 22 separated from the frame 18 and the filter 116 in the exposed position, the user can remove (e.g., disassemble) the filter 116 from the filter mount 126 along insertion axis D, as shown in FIG. 12. For example, the filter 116 can be slid of the filter mount 126 by touching only a small area of the filter 116. The tank cover 112 does not have to be removed and may remain in place on the tank container 108. While removed, the filter 116 can be cleaned, i.e. any debris stuck on the upstream side 118 of the filter can be wiped or rinsed off, or replaced with a new filter 116. The filter mount 126 can be also cleaned and/or serviced.

With the tank 22 separated from the frame 18, the user can remove the cover 112 from the tank container 108. This may also entail removing one or more of the filter 116, separator 58, and/or probes 150, 152 that are carried by the cover 112 (see FIG. 6).

With the cover 112 removed, the strainer 148 (see FIG. 6) can be removed from the container 108. A user can grasp the strainer 148 and lift the strainer 148 out of the tank container 108. As the strainer 148 is lifted upwardly, large debris and hair is captured on the strainer 148, while liquid and small debris drains through the strainer 148. The user can then dispose of any debris on the strainer 148 in a waste receptacle.

The remaining dirty liquid in the tank container 108 can be disposed of by inverting the container 108 and pouring out the dirty liquid into an appropriate liquid waste receptacle, such as a sink, toilet, or drain.

The above-described steps are generally performed in reverse order to reassemble the tank 22 and to remount the tank 22 on the floor cleaner 10. Optionally, the apparatus 10 may have a feature that prevents the tank 22 from being mounted without a filter 116 in place. For example, a feature may block the filter mount 126 from pivoting to the nested position if the filter 116 is missing. This prevents the tank 22 from being fully inserted into the tank receiver 92 without a filter.

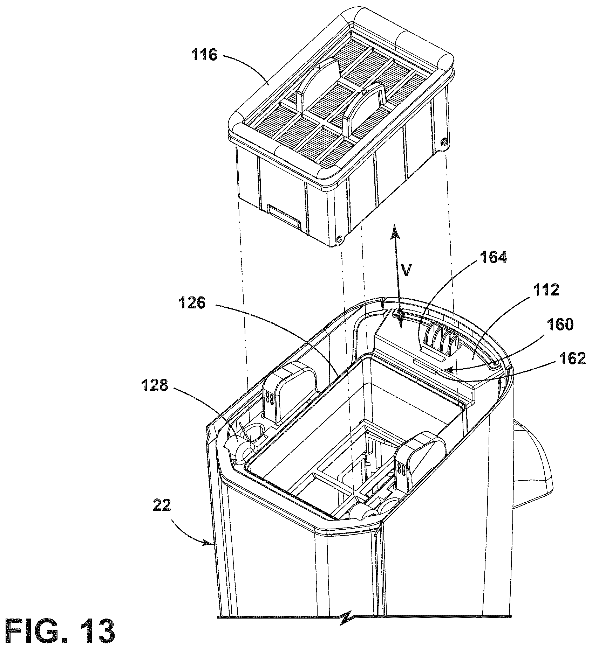

An alternative embodiment of the recovery tank 22 is illustrated in FIG. 13, where the recovery tank 22 has a filter latch 160 that can be engaged by the user to hold the filter mount 126 in the nested position when it is removed from the floor cleaner 10 and prevent movement of the filter mount 126 to the exposed position. In this embodiment, the filter mount 126 will automatically move the filter 116 to the exposed position without user intervention as described previously, but the user can selectively engage the filter latch 160 once the tank 22 is removed so that the filter mount 126 is held in the nested position. FIG. 13 shows the filter latch 160 engaged to hold the filter mount 126 in the nested position. This may make the tank 22 easier to install back on the floor cleaner 10 and allows the filter 116 to be removed and/or inserted vertically along a vertical insertion axis V, as shown in FIG. 13. Optionally, filter latch 160 can be included in any embodiment of the tank 22 described herein.

Various embodiments of the filter latch 160 are possible. In one embodiment, the action of pushing the filter mount 126 downward into the nested position can engage the filter latch 160, which locks the filter mount 126 in place until the tank 22 is installed back on the floor cleaner. The tank receiver 92 (FIG. 5) can be configured to disengage the latch 160 upon the tank 22 being re-mounted so that the latch 160 is reset for the next time the tank 22 is removed, and the filter 116 will automatically move the exposed position without user intervention as described previously. For example, the latch 160 can be mounted to the cover 112 and can have a latching end 162 that is linearly moveable and selectively overlaps the filter mount 126 to hold it in the nested position, The latch 160 also has a latch actuator 164 that is coupled with the latching end 162. A portion of the tank receiver 92 presses on the latch actuator 164 when the tank 22 is installed and retracts the latching end 162 to rest the latch 160 to the disengaged position.

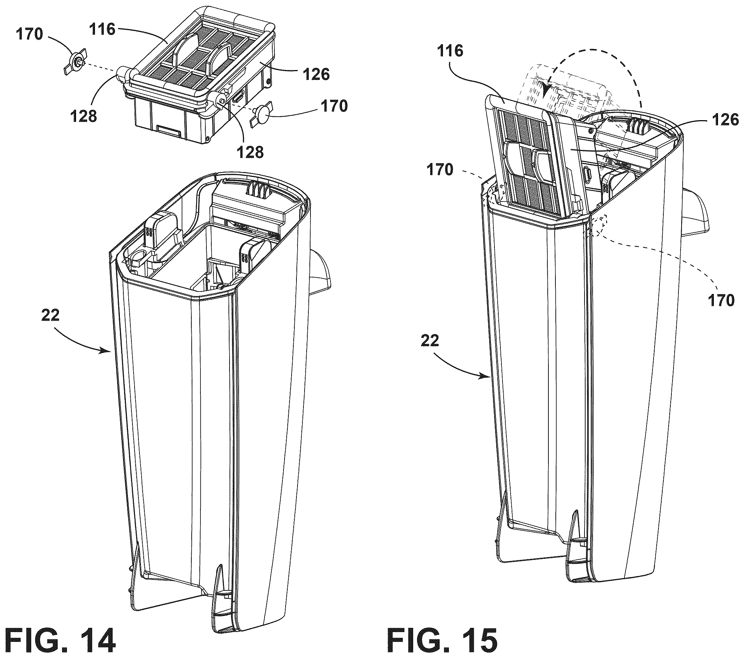

Another alternative embodiment of the recovery tank 22 is illustrated in FIGS. 14-15, where the filter mount 126 has at least one rotational damper 170 to slow the speed of the filter 116 as it rotates to the exposed position. Dampening the opening motion helps control the force on the filter 116 and may prevent the filter 116 from being ejected from the tank 22 when the filter mount 126 flips up. It is noted that, depending on the damping force and how much the opening movement is slowed, the filter 116 may only begin to automatically open, e.g., pop up, once the tank 22 is full removed from the receiver 92 (see FIG. 11). Optionally, the rotational damper 170 can be included in any embodiment of the tank 22 described herein.

In one embodiment, the tank 22 can include two rotational dampers 170 operationally coupled with the two pivot arms forming the hinge 128. The dampers 170 may each impart a resistance or torque on one of the pivot arms, effectively controlling the pivoting motion of the filter mount 126.

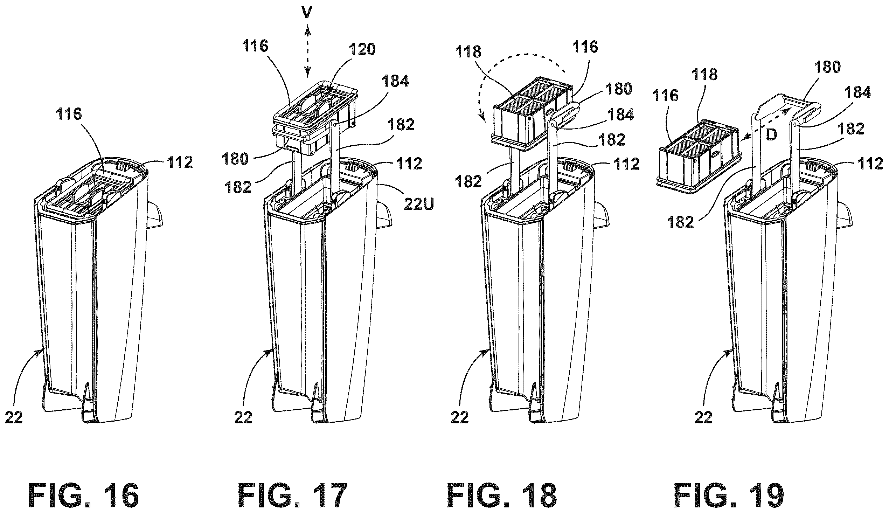

Yet another alternative embodiment of the recovery tank 22 is illustrated in FIGS. 16-19, where instead of immediately pivoting to show the upstream side 118 of the filter, the filter pop-out mechanism first translates upwardly along vertical insertion axis V to space the filter 116 away from the upper end 22U of the tank 22 as shown in FIG. 17, and then automatically flips over to display the upstream side 118 as shown in FIG. 18. In this position, the user can visually inspect the upstream side 118 to determine the dirtiness of the filter 116 without having to touch the filter 116 or any other dirty components of the apparatus 10. The filter 116 can then selectively be removed from the tank 22, as shown in FIG. 19. Optionally, translating/rotating pop-out mechanism can be included in any embodiment of the tank 22 described herein.

In one embodiment, a filter mount 180 is coupled with the tank cover 112 by a pair of extendable arms 182. The filter mount 180 supports the filter 116 on the tank 22. The arms 182 are coupled at one end thereof with the cover 112 and at the other end thereof with the filter mount 180. The filter mount 180 is pivotally coupled with the arms 182 by a hinge or bearing 184. The arms 182 can be biased upwardly by springs (not shown) such that when the tank 22 is removed from the floor cleaner, the arms 182 translate upwardly such that the filter mount 180 is raised upwardly away from the cover 112. Extension of the arms 182 to an uppermost position forces the filter mount 180 to rotate about 180 degrees about the hinge 184 such that the upstream side 118 of the filter 116 is visible from a user's perspective viewing the top of the tank 22.

The filter 116 is configured to slide into and out of the mount 180, or otherwise be inserted into and removable from the mount 180. In one embodiment, the filter mount 180 can have a U-shaped filter frame that is complementary in shape to the filter 116. For example, the filter mount 180 can surround three sides of the filter 116. The filter mount 180 may be provided with rails or other guides for retaining the filter 116 therein. When the filter mount 180 is in the extended and exposed position as shown in FIG. 18, the filter 116 is removable from and insertable into the filter mount 180 along insertion axis D, which can, for example, be perpendicular to the axis of the hinge 184 and/or perpendicular to the vertical translation axis V. Yet other configurations for filter mount 180 are possible.

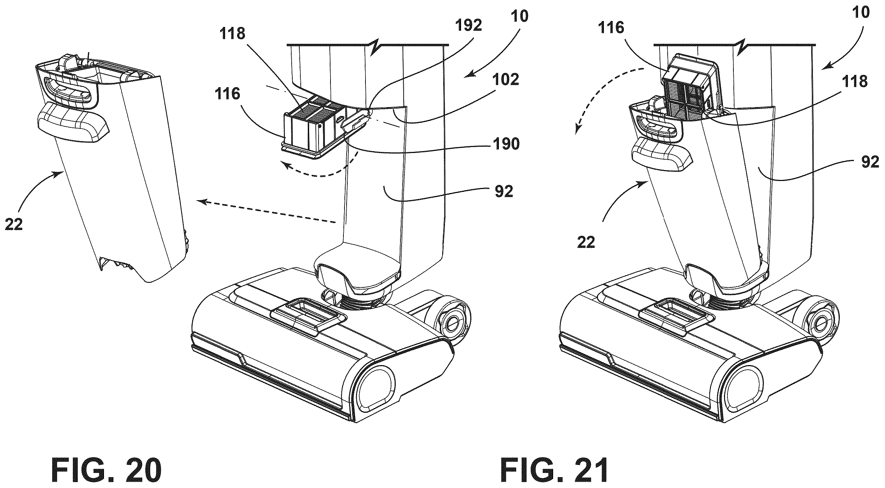

Still another alternative embodiment of the recovery tank 22 is illustrated in FIG. 20, where, instead of being removable with the tank 22, the filter 116 is coupled with the tank receiver 92, and the filter pop-out mechanism is configured to automatically "pop out" the filter 116 after removal of the recovery tank 22 from the upright body 12 to place it in the exposed position and display the upstream side 118.

In one example, a filter mount 190 is pivotally coupled with the tank receiver 92 by a hinge 192 and is biased toward the exposed position, an example of which is shown in FIG. 20. The filter mount 190 supports the filter 116 on the floor cleaner 10. In the nested position (not shown), the filter mount 190 is received within the tank receiver 92, e.g., withing the ceiling 102 of the tank receiver 92, and in the exposed position the filter mount 190 is at least partially outside the receiver 92.

When the tank 22 is removed from the receiver 92, the filter mount 190 rotates downwardly and forwardly about an axis H defined by the hinge 192 to reveal the upstream side 118 of the filter 116. The filter 116 can be removed from the mount 180 by sliding it downwardly or forwardly, depending on the configuration of the mount 180.

A further alternative embodiment of the recovery tank 22 is illustrated in FIG. 21, where the recovery tank 22 has a dry-out position...The tank 22 can still be fully removed from the apparatus 10 for emptying and cleaning, and optionally servicing the filter 116, but instead of air-drying the tank 22 when disassembled or installing a still-wet tank 22 back in place, which can lead to unpleasant odors, the tank 22 can be replaced on the apparatus 10 in the dry-out position as shown in FIG. 21. In the dry-out position, the lower end of the tank 22 is seated in the receiver 92 and the upper end of the tank 22 is pivoted out of the receiver 92 so that the filter 116 is in the exposed position. Enabling the tank 22 to store within the receiver 92 in an open position enables faster air-drying of the tank 22, cover 112, filter 116, and other internal tank surfaces after use. The user can simply push the receiver tank 22 into the fully-assembled position (e.g., FIG. 1) within the tank receiver 92 before a cleaning operation. The filter 116 automatically pivots back into the nested position as the tank 22 moves into the fully-assembled position. Optionally, the dry-out position can be included in any embodiment of the tank 22 described herein.

Although specific embodiments of the surface cleaning apparatus with a serviceable filter are shown, other embodiments of the surface cleaning apparatus with a serviceable filter are within the scope of the present disclosure. The surface cleaning apparatus with a serviceable filter may be used in different types of cleaning apparatus including, without limitation, an "all in the head" type apparatus, upright apparatus having a cleaning base and an upright body for directing the base across the surface to be cleaned, canister apparatus having a cleaning implement connected to a wheeled base by a vacuum hose, "stick" type apparatus, portable cleaning apparatus adapted to be hand carried by a user for cleaning relatively small areas, robotic cleaning apparatus, and central vacuum systems. The surface cleaning apparatus with a serviceable filter may also be used in apparatus performing "dry" vacuum cleaning only or apparatus having steam delivery.

The terms "comprising" or "comprise" are used herein in their broadest sense to mean and encompass the notions of "including," "include," "consist(ing) essentially of," and "consist(ing) of. The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples.

The above description relates to general and specific embodiments of the disclosure. As such, this disclosure is presented for illustrative purposes and should not be interpreted as an exhaustive description of all embodiments of the disclosure or to limit the scope of the claims to the specific elements illustrated or described in connection with these embodiments. Any reference to elements in the singular, for example, using the articles "a," "an," "the," or "said," is not to be construed as limiting the element to the singular.

Likewise, it is also to be understood that the appended claims are not limited to express and particular compounds, compositions, or methods described in the detailed description, which may vary between particular embodiments that fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

## Claims

1. A surface cleaning apparatus (10) comprising:
a housing including a suction inlet port (60) for drawing in liquid, debris and air, the housing being movable over a surface to be cleaned;
a suction source (54) within the housing, the suction source (54) configured to generate a working airstream through a recovery pathway (50) including the suction inlet port (60);
a recovery tank (22) removably mounted on the housing and forming a portion of the recovery pathway (50), the recovery tank (22) comprising:
a tank container (108) comprising an opening at an upper end (22U) thereof;
and
a tank cover (112) closing the opening at the upper end (22U) thereof, the tank cover (112) comprising a recess (122) and an air outlet (114) through which the working airstream passes to exit the recovery tank (22);
a filter (116) fluidly downstream of the air outlet (114), the filter (116) comprising an upstream side (118) and a downstream side (120) through which the working airstream sequentially passes; and
a filter mount (126) coupled to one of the tank cover (112) and the housing, the filter mount (126) configured to support the filter (116) and having:
a nested position in which the filter mount (126) is at least partially received within the recess (122) of the tank cover (112) and the upstream side (118) of the filter (116) faces a bottom of the recess (122); and
an exposed position in which the filter mount (126) is at least partially outside the recess (122) and the upstream side (118) of the filter (116) is visible;
wherein the filter mount (126) is configured to automatically move from the nested position to the exposed position in response to disassembly of the recovery tank (22) from the housing, whereby a user can visually inspect the upstream side (118) of the filter (116) to determine the dirtiness of the filter (116).

2. The surface cleaning apparatus (10) of claim 1 wherein the filter mount (126) is coupled to the tank cover (112) by a hinge (128) defining an axis about which the filter mount (126) pivots and is biased toward the exposed position by at least one spring (130).

3. The surface cleaning apparatus (10) of any one of claims 1-2 wherein the recovery tank (22) comprises a front side (22F) and a rear side (22R), and wherein the filter mount (126) is coupled to the tank cover (112) by a hinge (128), defining a pivot axis that is closer to the rear side (22R) than the front side (22F), such that the filter mount (126) pivots up and away from the front side (22F) of the recovery tank (22) when automatically moving from the nested position to the exposed position in response to disassembly of the recovery tank (22) from the housing.

4. The surface cleaning apparatus (10) of any one of claims 1-3 wherein the housing comprises a recovery tank receiver (92), and the filter mount (126) is configured to automatically move to the nested position in response to mounting the recovery tank (22) in the recovery tank receiver (92).

5. The surface cleaning apparatus (10) of any one of claims 1-4 wherein the filter (116) comprises a filter media (134) comprising a first porous foam layer (134A), a second porous foam layer (134B) on a downstream side (120) of the first porous foam layer (134A), and a non-woven layer (134C) on a downstream side (120) of the second porous foam layer (134B), the non-woven layer (134C) defining the downstream side (120) of the filter (116) and the first porous foam layer (134A) defining the upstream side (118) of the filter (116).

6. The surface cleaning apparatus (10) of any one of claims 1-4 wherein the filter (116) comprises a filter media (134) comprising a porous foam layer (134A) and a non-woven layer (134C), the non-woven layer (134C) defining the downstream side (120) of the filter (116) and the porous layer (134A) defining the upstream side (118) of the filter (116).

7. The surface cleaning apparatus (10) of any one of claims 1-6 wherein the filter mount (126) is pivotally coupled to one of the tank cover (112) and the housing for rotation about a pivot axis, and wherein the filter mount (126) comprises a filter frame (132) that is complementary in shape to the filter (116), wherein the filter (116) is removable from and insertable into the filter frame (132) along an insertion axis (D) that is perpendicular to the pivot axis.

8. The surface cleaning apparatus (10) of any one of claims 1-7 wherein the recovery tank (22) comprises a filter latch (146) that is selectively engageable to hold the filter mount (126) in the nested position and prevent movement of the filter mount (126) to the exposed position.

9. The surface cleaning apparatus (10) of any one of claims 1-8, wherein the recovery tank (22) comprises at least one of:
a standpipe (140) within the tank container (108), the standpipe (140) forming a flow path between a tank inlet (142) formed at a lower end of the tank container (108) and an opening (144) at an upper end of the standpipe (140); and
a baffle (58) that directs fluid and/or debris out of the working airstream to the sides and/or bottom of the recovery tank (22);
wherein the filter (116) is fluidly downstream of the at least one of the standpipe (140) and the baffle (58) within the recovery pathway (50); and
wherein the filter (116) is positioned above the at least one of the standpipe (140) and the baffle (58) when recovery tank (22) is mounted on the housing.

10. The surface cleaning apparatus (10) of any one of claims 1-9, comprising:
an upright body (12) comprising a handle (16) and a frame (18);
a cleaning base (14) operably coupled to the upright body (12);
an agitator (46) on the cleaning base (14);
a supply tank (20) adapted to hold a supply of cleaning fluid;
a fluid dispenser (38) on the cleaning base (14), the fluid dispenser (38) in fluid communication with the supply tank (20);
wherein the suction inlet port (60) is provided with the cleaning base (14) and in fluid communication with the suction source (54);
wherein the recovery tank (22) is removably mounted on the frame (18);
wherein the filter mount (126) is coupled to one of the tank cover (112) and the frame (18);
wherein the filter mount (126) is configured to automatically move from the nested position to the exposed position in response to disassembly of the recovery tank (22) from the frame (18).

11. The surface cleaning apparatus (10) of claim 10 wherein the frame (18) comprises a recovery tank receiver (92), and the filter mount (126) is configured to automatically move to the nested position in response to mounting the recovery tank (22) in the recovery tank receiver (92).

12. The surface cleaning apparatus (10) of any one of claims 1-11 wherein the filter mount (126) has at least one rotational damper (170) to slow the movement of the filter (116) from the nested position to the exposed position.
